(19) Europäisches Patentamt
European Patent Office
Office européen des brevets

(11) **EP 2 037 755 B1**

(12) **EUROPEAN PATENT SPECIFICATION**

(45) Date of publication and mention
of the grant of the patent:
**30.11.2016 Bulletin 2016/48**

(21) Application number: **07784500.6**

(22) Date of filing: **21.06.2007**

(51) Int Cl.:
*A01K 11/00* (2006.01)     *A01K 15/02* (2006.01)
*A23K 20/142* (2016.01)     *A23K 20/147* (2016.01)
*A23K 20/163* (2016.01)     *A23K 40/20* (2016.01)
*A23K 50/42* (2016.01)

(86) International application number:
**PCT/US2007/071750**

(87) International publication number:
**WO 2007/149962 (27.12.2007 Gazette 2007/52)**

(54) **EDIBLE PET CHEW AND METHOD OF MAKING THE SAME**

ESSBARES KAUSTÜCK FÜR HAUSTIERE UND VERFAHREN ZU SEINER HERSTELLUNG

ACCESSOIRE COMESTIBLE À MÂCHER POUR ANIMAL DOMESTIQUE ET SA MÉTHODE DE FABRICATION

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **21.06.2006   US 815682 P**

(43) Date of publication of application:
**25.03.2009   Bulletin 2009/13**

(73) Proprietor: **MARS, INCORPORATED**
**McLean,VA 22103 (US)**

(72) Inventors:
• **TORNEY, Allan, A.**
**Brampton, ON L6X 2A9 (CA)**
• **UNLU, Emine**
**Murfreesboro, TN 37130 (US)**

• **WILLCOCKS, Neil**
**Brentwood, TN 37027 (US)**
• **ZUBAIR, Kasim**
**Brompton, ON L6R 3C3 (CA)**
• **BIERER, Tiffany**
**Brentwood, TN 37027 (US)**

(74) Representative: **Carpmaels & Ransford LLP**
**One Southampton Row**
**London WC1B 5HA (GB)**

(56) References cited:
**WO-A-00/13521          US-A- 4 419 372**
**US-A- 5 240 720          US-A1- 2002 090 444**
**US-B1- 6 455 083**

**Description**

BACKGROUND OF THE INVENTION

Field of the Invention

The present invention relates to edible pet chews, the compositions from which they are made and methods for making pet chew products. In particular, the pet chew of the present invention is formed from a thermoplastic material comprising fibrous protein, water absorbing polymer, plasticizer, and water.

Related Background Art

Current pet chew products can be loosely grouped into two categories. One type is relatively hard and friable, which crumbles or breaks down relatively quickly and is more easily digested, but has relatively short lasting times in consumption. The second group is comprised of highly dense or compacted products with more elastic or rubbery properties, that are more difficult to chew, harder to digest, and have more extended lasting times in consumption.

There has been a proliferation of pet dental chews in the market, specially designed to address oral care problems. The majority of these products are based on hard textures that require repeated chewing for efficacy. There is ample published literature to support the assertion that dog chews of various textures can reduce build up of tartar (Gorrel and Rawlings, 1996; Rawlings et al., 1998; Gorrel and Bierier; 1999; Gorrel et al., 1999 and Lage at al., 1990).

While such products may offer teeth cleaning functions, in many cases they pose risks to dogs either from physical injury such as gum injury, teeth fracture, and blockage of the digestive system. This situation is further exacerbated by the wide difference in skull (Jaslow, 1987) and breed sizes with in the domestic dog (*Canis familiaris*). A chew that may seem perfectly safe for some breeds or skull types may raise safety concerns when offered to different breeds or skull types. There is also the risk of nutrient inadequacy as most of these products are not nutritionally "complete and balanced".

Other dental chews are made with non-food materials such as thermoplastic polymers that offer no nutritional benefits to dogs. The associate safety risks include blockage of the digestive system since they are not digestible, and in extreme situations may require surgical intervention to correct.

There remains a need for a product that is completely edible, long lasting and safe, that is designed to effectively clean teeth without risk of health damage such as choking, tooth damage, intestinal obstruction or other injury.

US-B1-6 455 083 discloses a pet chew made from an edible, protein-based nutritious thermoplastic, comprising 30-50 wt% protein comprising a mixture of plant and animal derived protein, 20-50 wt% starch, 10-20 wt% water, 1-10 wt% edible fibre, 0.5-3 wt% metallic salt hydrate, and wherein the edible thermoplastic when moulded has a density of 1.2 to 1.5 g/cubic centimetres. The composition is prepared by thermoplastic extrusion, compression, transfer or injection moulding.

WO 00/13521 A discloses a chewable thermoplastic composition for pet toys comprising 50-70 wt % protein, 10-30 wt% water, 0. 5-5 wt% flavouring, 0-30 wt% edible plasticizer, 0-15 wt% fibre reinforcement, 0-15 wt% modifier, 0-5 wt% nutrient or hygiene additive. The composition can be prepared by injection moulding, pressure moulding, transfer moulding, pressure moulding or extrusion moulding.

US-A-5 240 720 discloses a completely digestible, highly nutritious dog chew that is quickly and easily, individually modifiable by a dog owner to the texture preferences or hardness need of a particular dog, consisting of a homogenous mixture of 47.5 wt% of poultry meal, 47.5 wt% casein and 5 wt% gelatin, having a total moisture content of 10-15%. An injection moulding process is employed to shape the chew into a simulated bone appearance.

US 2002/090444 A1 discloses a dried chewable pet food comprising a matrix comprising preferably 25-50 wt% of an animal and/or plant protein source, a gelatinised carbohydrate source, 2-15 wt% insoluble fibre, 0.5-5.0 wt% of humectant, for reducing brittleness of the matrix; and the dried pet food has a moisture content of less than 10 wt%. The comp is prepared by extrusion gelatinisation.

US-A-4 419 372 discloses an extruded, simulated rawhide product suitable for ingestion by canine pets consisting of 30-70 wt% protein comprising ground, defatted, protein-containing oil seed, 6-12 wt% water, 5-30 wt% polyol plasticizer, and 0.1-5 wt% lecithin, the product having a flexibility, toughness and appearance resembling rawhide.

SUMMARY OF THE INVENTION

According to the invention there is provided an edible pet chew comprising a) fibrous protein in an amount of 30% to 50% by weight of the chew, wherein the fibrous protein comprises a mixture of wheat protein isolate, soy protein isolate and sodium caseinate, b) gelatin in an amount of 15% to 25% by weight of the chew, c) plasticizer in an amount of 15% to 30% by weight of the chew, wherein the plasticizer comprises glycerol or hydrogenated starch hydrolysate,

and d) water in an amount of 5% to 150% by weight of the chew, wherein the solubility of the edible pet chew.is 60% to,95% *in vitro* disappearance (IVD) (as measured by the method set out in paragraphs [0044] to [0054] of the description). The pet chew product may be a thermoplasticized molded product and has the texture necessary to function as an oral care device, but reduces the potential that large pieces of the chew will be broken off during chewing and is a highly soluble chew composition in the stomach and intestinal environment of the pet. Preferably the pet chew is a dog chew that provides oral care benefits.

Also according to the invention there is provided an edible pet chew composition for preparing a thermoplasticized molded pet chew, the composition comprising a) fibrous protein in an amount of 30% to 50% by weight of the composition wherein the fibrous protein comprises wheat protein isolate and soy protein isolate, b) gelatin in an amount of 15% to 25% by weight of the chew, c) plasticizer in an amount of 15% to 30% by weight of the composition wherein the plasticizer comprises glycerol or hydrogenated starch hydrolysate, and d) water in an amount of 5% to 15% by weight of the composition, wherein the solubility of the edible pet chew is 60% to 95% *in vitro* disappearance (IVD) (as measured by the method set out in paragraphs [0044] to [0054]. of the description).

Also according to the invention there is provided a method of preparing an edible pet chew comprising the steps of a) forming a pet chew composition by admixing (i) fibrous protein in an amount of 30% to 50% by weight of the composition wherein the fibrous protein comprises wheat protein and soy protein isolate, (ii) gelatin in an amount of 15% to 25% by weight of the chew, (iii) plasticizer in an amount of 15% to 30% by weight of the composition wherein the plasticizer comprises glycerol or hydrogenated starch hydrolysate, and (iv) water in an amount of 5% to 15% by weight of the composition, b) thermoplasticizing the pet chew composition, and c) molding the thermoplastic pet chew composition to form the pet chew, wherein the solubility of the edible pet chew is 60% to 95% *in vitro* disappearance (IVD) (as measured by the method set out in paragraphs [0044] to [0054] of the description).

BRIEF DESCRIPTION OF THE DRAWINGS

Figure 1 is a diagram of an exemplary method of producing the pet chew product according to the invention.
Figure 2 is another diagram of an exemplary method of producing the pet chew product according to the invention.
Figure 3 is yet another diagram of an exemplary method of producing the pet chew product according to the invention.
Figure 4 is a schematic drawing of the injection molding process that may be used to make the pet chew product according to the invention.
Figure 5 is an illustration of a particularly preferred pet chew of this invention.

DETAILED DESCRIPTION OF THE INVENTION

The present invention is directed to an edible pet chew and methods for manufacturing a nutritious product that is designed to remove plaque and tartar through mechanical abrasion while providing safe occupation and enjoyment. The pet chew of the invention provides rapid breakdown of the product once ingested by the animal and demonstrates significant reduction in plaque and tartar as compared to a standard test diet. The composition of the pet chew creates a nutritious and functional treat, which will promote a healthy life style for the animal. A particularly preferred pet chew is designed for dogs, and most preferably a class of dogs, such as described in WO 2007/149972.

The edible pet chew composition of the invention is formed from a thermoplastic material comprising a fibrous protein, a water absorbing polymer, a plasticizer, and water. The pet chew of the invention is preferably a mono-component/mono-texture product, although it is also possible that it may form part of a dual component product. As used herein, mono-component/mono-texture product means that the chew product is a substantially homogeneous molded mass that be formed into any shape desired for the a pet chew.

The pet chew exhibits ductile properties so that when chewed, the animal's teeth sink into the product causing the product to break down in a controlled manner under repetitive stress. The edible thermoplastic material can be molded into a variety of shapes to provide good strength and stiffness and other desired physical properties to enhance functionality and chewing enjoyment.

Unlike similar products in the marketplace, the present pet chew product is designed to be 100% nutritionally complete and balanced for animal nutrition. The softer, chewier texture of the present pet chew improves animal enjoyment and demonstrates enhanced oral care efficacy. The pet chew composition of the invention provides a balanced blend of highly digestible proteins in a matrix of water-soluble materials to improve nutritional performance and animal safety.

Fibrous proteins are generally strong and relatively insoluble. Due to such properties, fibrous proteins are important in providing the structural backbone of the pet chew product.

Plasticizers dissolve in the polymer, separating polymer chains and thus facilitating molecular movement. Plasticizers are commonly used to increase workability, flexibility and extensibility of polymers (Ferry, 1980). Plasticizers also reduce water activity of food systems by binding water that is otherwise available for biological reactions such as microbial growth. In preferred embodiments the pet chew compositions of the invention will contain starch in an amount less than about 5%, preferably less than about 4% and more preferably less than about 3% by weight of the composition. This composition is thermoplasticized, preferably by extrusion, and molded to form the pet chew product. The pet chew product is preferably formed by injection molding. One skilled in the art will readily recognize that the pet chew of this invention could also be prepared by compression molding, extrusion without molding or tabletting techniques.

The properties of the proteinaceous materials used in the pet chew are subject to chemical and physical interactions (e.g., protein/protein and with other materials including water absorbing polymers) to improve their solubility and textural properties to enhance oral care benefits and animal safety. Animal safety is achieved through product design to minimize risk in all areas. Control of texture minimizes risk of dental fractures; controlled product size reduction through chewing reduces risk of choking; and superior solubility/digestibility eliminates risk of intestinal blockage.

The pet chew composition may also contain at least one fat, flavor enhancers, preservatives, nutrients, and/or colorants. As used herein fat includes edible oils and preferably will be liquid fat at room temperature. Exemplary fats include corn oil, soybean oil, peanut oil, cottonseed oil, grapeseed oil, sunflower oil, flaxseed oil (and other sources of omega-3 and omega-6 fatty acids), vegetable oil, palm kernel oil, olive oil, tallow, lard, shortening, butter and combinations thereof. In a preferred embodiment, the fat is vegetable oil. If the fat is present, it will generally be in a range of about 1 to about 20%, preferably about 1.5 to about 10% and more preferably about 2 to about 5% by weight of the pet chew composition. Flavors are well known. For example, the use of flavor oils such as rosemary oil, eucalyptus oil and clove oil may be employed. Nutrients include, but not limited to vitamins, minerals, and functional ingredients. Other ingredients may also be included in the composition, for example, release agents, stabilizers, and emulsifiers.

In a preferred embodiment, the thermoplastic composition may also contain active ingredients for removal of plaque and tartar, and materials for breath freshening and general oral health.

The pet chew of the present invention demonstrates high flexibility and elastic properties to improve chewing enjoyment and lasting time. The product is designed to break down in a controlled fashion under repetitive chewing. The texture of the pet chew ensures proper balance between animal safety, oral care efficacy, enjoyment and lasting time. Further, the breakdown or fracture of the pet chew of the invention under mechanical stress is controlled to avoid release of large pieces that can be swallowed intact and increase risk of choking and digestive obstruction.

Example 1

A preferred pet chew composition of the invention:

| Ingredients | Liquid/Power | Weight percent |
|---|---|---|
| Fibrous protein | Powder | 30-50 % |
| Gelatin 100-200 bloom | Powder | 15-25 % |
| Glycerine | Liquid | 15-25 % |
| Water | Liquid | 5-15 % |
| Hydrogenated Starch Hydrolysate | Liquid | 0-15 % |
| Flavor enhancer | Powder | 1-10% |
| Fat | Liquid | 1-10% |
| Nutrients | Powder | 3-7 % |
| Preservative | Powder | 0.05-0.55 % |
| Colorant | Powder | 0.005-0.045 % |

The water activity of the final products ranges from 0.2-0.85. In addition, individual ingredient levels and ratios of liquid to powder may be modified to obtain various final product textures. Further, replacing ingredients with alternatives may also result in different final product textures. For example, the use of 200-bloom gelatin instead of 100-bloom gelatin would result in a firmer product.

Example 2

A particularly preferred pet chew composition:

| Ingredients | Weight percent |
|---|---|
| Wheat Protein Isolate | 17% |
| Soy Protein Isolate | 14% |

(continued)

| Ingredients | Weight percent |
|---|---|
| Sodium Caseinate | 8% |
| Glycerin | 17% |
| Hydrogenated Starch Hydrolysate | 9% |
| Gelatin (100 Bloom) | 17% |
| Water | 7% |
| Vegetable Oil | 3% |
| Flavor/Nutrients/Preservatives/Colorant | 8% |

Example 3

Yet another preferred pet chew composition:

| Ingredients | Weight percent |
|---|---|
| Wheat Protein Isolate | 18% |
| Soy Protein Isolate | 15% |
| Sodium Caseinate | 8.5% |
| Glycerin | 17.5% |
| Hydrogenated Starch Hydrolysate | 2.8% |
| Gelatin (100 Bloom) | 18.5% |
| Water | 9.2% |
| Corn Oil | 1.5% |
| Flavor/Nutrients/Preservatives/Colorant | 9% |

Example 4

Another preferred pet chew composition:

| Ingredients | Weight Percent |
|---|---|
| Wheat Protein Isolate | 18.8% |
| Soy Protein Isolate | 15.6% |
| Sodium Caseinate | 8.9% |
| Glycerin | 15.8% |
| Hydrogenated Starch Hydrolysate | 2.5% |
| Gelatin (100 Bloom) | 19.3% |
| Water | 8.3% |
| Corn Oil | 1.4% |
| Flavor/Nutrients/Preservatives/Colorant | 9.4% |

Product performance of the pet chew is measured against a number of criteria including plaque and tartar reduction, breath freshening, lasting time, palatability as measured by paired preference, solubility, textural attributes including hardness, density, elasticity, friability, water absorption capacity, and speed of solubilization.

Texture measurements were performed with a TA.HDi Texture Analyzer (Texture Technologies Corp., Scarsdale, New York) equipped with a 250-500 kg load cells. A 5mm diameter cylindrical probe was used for uniaxial compression or puncture tests, and the tests were conducted at a room temperature of 25°C. Data was collected using the Texture Expert software (version 2.12) from Texture Technologies Corp. Two different uniaxial compression or puncture tests were run. These tests were selected because they best resemble the biting and chewing of the test samples by dogs.

The compression analysis parameters are as follows. Work (W) is defined as an estimate of work; and therefore shows the toughness of the product. A tough product will have a higher work value than a less tough product. The area shows the "force" or load that must be applied to the product to cause it to break. The area under the curve represents toughness. The expressed "Area" units come from the multiplication of y-axis per x-axis as N*mm. To convert "Area" to Work -W- (F/d) multiply by 0.1020408 $m^2/mm/s^2$.

The Max Force (N) is defined as the maximum amount of force needed to overcome the product's hardness. Usually a hard product will be associated with high ordinate (y -axis) values. The expressed "Force" unit derives from a direct association with mass weight in kg. To convert "Force" to "Max Force" -N-multiply by 9.81 m/s$^2$ (the acceleration of gravity).

Travel (mm) is represented as the point (distance) at which the peak force is reached. Thus it emulates the resistance of the product as a combination between toughness and hardness, in addition to elasticity, attributed to a measurement of how far the probe has traveled to reach the maximum force. Larger travel numbers are indicative of more elastic products. Resistance to breaking is directly proportional to travel values.

Linear Distance (mm) is calculated by measuring the length of an imaginary line pulled taunt joining all the trajectory points. This measure describes crumbly verses cohesive product attributes. It is a direct assessment of brittleness where a brittle product will produce more sharp peaks, resulting in a higher linear distance.

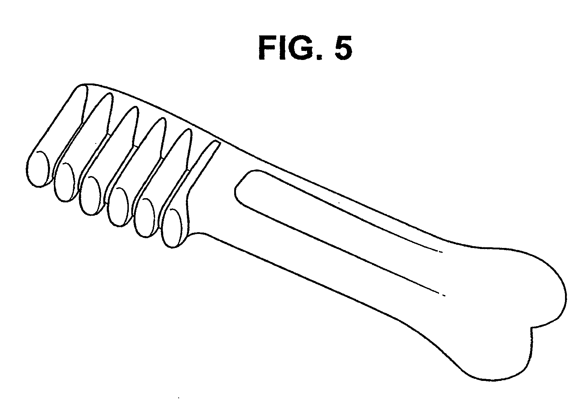

The values of hardness, toughness, elasticity, toughness were determined using whole product samples. A base platform, as observed with the TA.HDi, provided by Texture Technologies, was used to measure force/distance. An exemplary product sample that was made and tested is shown in Figure 5.

The sample was centered on the platform such that the knife will contact one location along the sample bone length at a time. Chosen locations included the brush head, the joint of the shaft to the brush head and the knuckle at the end of the shaft of the pet chew. Each location is contacted with the knife at a 90° angle while the sample is laying on its side placed on a flat platform surface. This is repeated at the three chosen locations along the length of the bone. The brush head, the joint of the shaft to the brush head and the knuckle at the end of the shaft of a pet chew are clearly visible in Figure 5. A minimum of 5 bones is generally measured per evaluated variable, with each of the following conditions. **Two sets of tests were conducted with the following parameters:**

A. The circular probe or knife is run at a (1) pre test speed of 5 mm/s (speed of probe before contacting sampling); (2) a test speed of 2 mm/s (speed of probe while travelling within the sample); (3) a post test speed of 5 mm/s (speed that the probe is withdrawn from the sample); and a distance of 50% compression (distance that probe travels within the sample until it is withdrawn).

B. The circular probe or knife is run at a (1) pre test speed of 5 mm/s (speed of probe before contacting sampling); (2) a test speed of 10 mm/s (speed of probe while travelling within the sample); (3) a post test speed of 5 mm/s (speed that the probe is withdrawn from the sample); and a distance of 50% compression (distance that probe travels within the sample until it is withdrawn).

The force in kg (y axis) is plotted against distance in mm (x axis) in which the starting force of 0 may be set as point 1 on the graph and the Max Force may be set as point 2 on the graph. The following parameters were measured: the Max Force 2, which is the maximum force value of the curve, is a measurement of hardness; the Linear Distance (mm), is calculated by measuring the length of an imaginary line pulled taunt joining all the trajectory points. It is a direct assessment of brittleness where a brittle product will produce more sharp peaks, resulting in a higher linear distance. For each of these parameters, the measurement was the average of the values of at least 5 samples of the product tested.

Hardness is measured as Max Force in N. As measured in the uniaxial compression or puncture test, the hardness or max force value of the inventive product, in certain embodiments, for the inventive pet chew is about 100 to about 700 Newtons, preferably about 150 to about 600 Newtons, more preferably about 200 to about 500 Newtons and most preferably about 250 to about 400 Newtons when the pet chew is designed for a dog that weighs less than 11.4 kg (25lbs) or about 200 to about 800 Newtons for a pet chew designed for a dog that weighs 11.4 kg (25lbs) or more measured as described above using a probe speed of 2.0 mm/sec. In a preferred embodiment, the pet chew designed for a dog that weighs 11.4kg or more has a hardness measurement of about 250 to about 650 Newtons, preferably about 275 to about 600 Newtons, and more preferably about 350 to about 550 Newtons measured using a probe speed of 2.0 mm/sec.

The toughness measured as Newtons x mm (Nmm) of the inventive product has a range of about 500 to about 12,000 Nmm, a preferred range of about 700 to about 10,000 Nmm, and a more preferred range of about 800 to about 5000 Nmm.

In yet another embodiment of this invention, it may be desirable to formulate the hardness of the pet chew based on both dog skull type and weight. In this embodiment, the hardness range for each category of dog type is set forth in the table below.

| | Dog Size | | |
|---|---|---|---|
| Skull type | Small < 10 kg | Medium 10-20 kg | Large > 20 kg |
| dolichocephalic | | | |
| hardness range (N) | 33-1270 | 300-2125 | 445-2295 |
| preferred range | 50-1220 | 350-2040 | 540-2210 |

(continued)

| Skull type | Dog Size | | |
|---|---|---|---|
| | Small < 10 kg | Medium 10-20 kg | Large > 20 kg |
| dolichocephalic | | | |
| most preferred range | 65-1125 | 410-1875 | 665-2030 |
| mesaticephalic | | | |
| hardness range (N) | 140-1850 | 215-2700 | 485-3630 |
| preferred range | 170-1785 | 235-2600 | 560-2500 |
| most preferred range | 210-1050 | 260-2380 | 700-3200 |
| brachycephalic | | | |
| hardness range (N) | 125-1535 | 150-3100 | 710-4780 |
| preferred range | 145-1480 | 145-3010 | 875-4590 |
| most preferred range | 180-1375 | 140-2760 | 1100-4200 |

The brittleness or linear distance of the inventive product was measured. The brittleness value of the inventive product has a range of about 100 to about 1500 mm, a preferred range of about 150 to about 1300 mm, and a most preferred range of about 200 to about 1000 mm.

Solubility

The in vitro measurement of solubility/digestibility of a pet chew may be used to indicate the amount of the pet chew that would solubilize or be digested in the gastrointestinal tract of a pet, and particularly a dog. The test performed is based on a portion or whole piece of a pet chew product. A particular size portion or piece, e.g., a 32-gram pet chew portion, may be used so that different formulations can be accurately compared. The outcome is expressed as percent (%) *in vitro* disappearance (IVD). The solubility measurement is performed by subjecting a specific amount of product to a number of solutions which represent the stomach and intestinal environments of a pet. Generally, the stomach environment is relatively acidic and the intestinal environment is relatively more alkaline compared to the stomach. After subjecting the product to these environments, any product left is filtered and dried. This leftover product is weighed and compared with the weight of the initial product. Percent IVD is the percentage of the weight of the dissolved product in comparison to the weight of the initial product. The solubility test is further described below.

Solutions Utilized:

Phosphate Buffer, 0.1M, pH 6.0 Solution: 2.1 grams of sodium phosphate dibasic, anhydrous, and 11.76 grams of sodium phosphate monobasic, monohydrate were dissolved in a 1 liter volumetric flask and brought up to volume with distilled/deionized (dd) water.

HCl Solution: 17.0 ml concentrated HCl was added to a 1 liter volumetric flask containing 500 ml dd water and brought up to volume with dd water. When 100 ml of HCl:pepsin is added to 250 ml of phosphate buffer, the pH should be close to 2.0. One way to achieve this is to use 850 ml of 0.1 N HCl + 150 ml of 1 N HCl to make 1000 ml of HCl stock solution. When 100 ml of HCl:pepsin is added to 250 ml phosphate buffer, the pH of the solution is about 1.9-2.0.

HCl:Pepsin Solution: The appropriate amount of pepsin (Sigma P-7000, pepsin amount is dependent on sample size being tested. 0.01 gram pepsin per 1 gram sample must be obtained in the final mixture at Step 6 of the procedure. For example 0.3 gram pepsin would be used for 30 grams sample) was placed in a 1 liter volumetric flask and brought up to volume with the HCl solution made above.

Chloramphenicol Solution: 0.5 gram chloramphenicol (Sigma C-0378) was brought up to volume in a 100 ml volumetric flask with 95% ethanol.

Sodium Hydroxide Solution, 0.5N: 20 grams NaOH was brought up to volume in a 1 liter volumetric flask with dd water.

Phosphate Buffer, 0.2M, pH 6.8 Solution: 16.5 grams of sodium phosphate dibasic, anhydrous, and 11.56 grams of sodium phosphate monobasic, monohydrate were dissolved in a 1 liter volumetric flask and brought to volume with distilled water.

Pancreatin:Phosphate Buffer Solution: The appropriate amount of porcine pancreatin (Sigma P-1750, enzyme amount is dependent on sample size being tested. 0.05 gram porcine pancreatin per 1 gram sample must be obtained in the final mixture of Step 8. For example, 1.5 grams of pancreatin would be used for 30 grams samples) was dissolved in a 500 ml volumetric flask and brought up to volume with 0.2M, pH 6.8 phosphate buffer solution made above.

Procedure Example:

1. Place numbered pieces of dacron fabric in a 57°C oven overnight and weigh the next day.
2. Weigh samples into Erlenmeyer flasks. (Weigh additional sample to dry as a control along with residue to account for moisture loss during %IVD calculation). Add 250 ml 0.1M pH6.8 Phosphate Buffer Solution to each flask.
3. Add 100 ml HCl:Pepsin Solution to each flask. Check that the pH of the mixture is about 2. Adjust with HCl if needed.
4. Add 5 ml Chloramphenicol Solution to each flask.
5. Stopper the flasks. Mix gently. Incubate at 39°C for 6 hours. Mix on a regular basis using a shaking water bath, set at a speed that causes the samples to constantly move in the flask while keeping the products submerged in the solution.
6. After incubation, add enough 0.5N Sodium Hydroxide Solution to each flask to reach a final pH of 6.8 for the mixture.
7. Add 100 ml Pancreatin: Phosphate Buffer Solution to each flask. Mix gently.
8. Stopper the flasks. Incubate at 39°C for 18 hours. Mix on a regular basis using a shaking water bath, set at a speed that causes the samples to constantly move in the flask while keeping the products submerged in the solution.
9. Filter the sample through tared pieces of dacron fabric from Step 1. Rinse with three times with dd water. Maintain at 57°C until constant weight is reached.
10. Record pH at the following stages:

   a. At step 4.
   b. After 6 hours of digestion.
   c. After addition of NaOH solution at step 7.
   d. After addition of pancreatin:phosphate buffer solution.
   e. After 24 hours.

Calculations:

$$\text{Residue Weight} = (\text{Filter} + \text{Sample weight after incubation}) - \text{Dry filter weight}$$

$$\% \text{ IVD} = 1 - \frac{(\text{Sample residue weight}) - (\text{Blank residue weight})}{\text{Dry matter weight}} \times 100$$

In certain embodiments, the pet chew composition possesses a solubility of at least 60% IVD, preferably at least 70 % IVD and more preferably at 75% IVD based on a maximum 32-gram piece (if the pet chew is less than 32 grams then typically a single chew product of a given gram weight will be used. It is not recommended to use a piece larger than 32 gram for a realistic reading. Of course one of ordinary skill will recognize that the mass of the pieces analyzed need to be substantially equivalent to make a comparison of the solubility numbers). While the solubility of the pet chew of this invention may be close to 100%, it generally will be in the range of about 60 to about 95% IVD. The solubility of a pet chew made from the formulation of Example 2 by extrusion and injection molding as described herein was about 85% IVD.

Extrusion

In a preferred embodiment, extrusion may be used to manufacture the products according to the present invention, preferably twin-screw extrusion for production of pellets. The pellets are subsequently melted and formed into particular shapes by post-extrusion forming, preferably by injection molding. Subsequent to injection molding, individual pieces of the products are trimmed for flash removal followed by cooling prior to packaging.

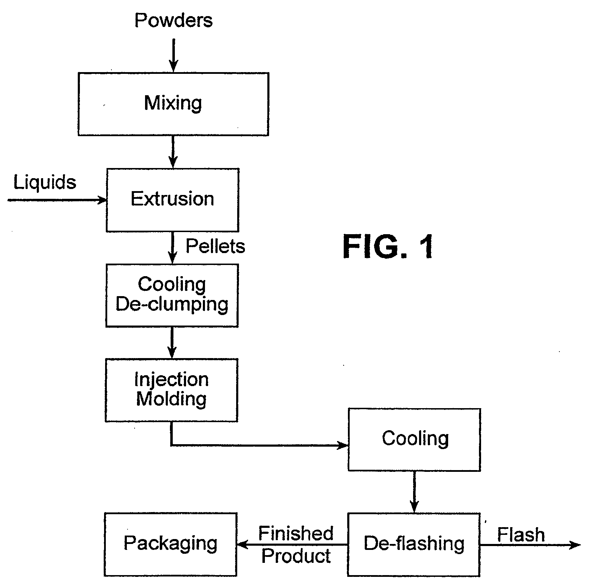

Figure 1 shows a diagram of an exemplary method of producing the pet chew product according to the invention. As shown in Figure 1, the manufacturing process from mixing of ingredients to finished product packaging occurs on a continuous basis. Powder ingredients are mixed in the mixer for about 5-30 minutes. Uniform mixture of powder ingredients is subsequently fed into an extruder, preferably a twin-screw extruder. Downstream from the powder inlet, liquid ingredients are added to transform the mixture of powder and liquid ingredients into a uniformly plasticized, moldable mass in the presence of heat and shear. During this process, the moldable mass is also cooked by the increased temperature in the extruder barrels. The temperature profile of the extruder barrels are determined by, among others, the composition, pressure, residence time in the extruder barrels, screw profile, screw speed and shear rate.

The temperature and shear in the extruder zones will be set to provide sufficient thermoplastification. This may be achieved with temperatures in a range of about 88°C to about 141°C in the middle zones and lower temperatures at either end of the barrel. Of course, greater temperatures may be employed in the middle zones.

Thus the temperature can be controlled across the barrel to enable optional venting of energy and moisture along the extruder. Forced venting may also be achieved by using vent/vacuum stuffers at the end of process section where most cooking is achieved on the moldable mass inside the extruder barrel.

At the extruder exit, extrudate is forced through a die with small orifices. Immediately behind the die, the extrudate is exposed to increasing pressure and temperature due to the restriction imposed by the small die openings thus use of extra cooling becomes increasingly important to ensure pellet quality.

Subsequent to exiting the extruder die, the plasticized extrudate is cut at the die surface by a surface cutter equipped with at least one blade in to small pellets. Rotational speed of the cutter may be adjusted depending on the size requirements of the pellets in addition to flow properties of the extrudate. Product temperature at the die exit may range from about 82°C to about 95°C, and is most preferably about 85°C.

After cutting, pellets are placed on moving conveyors to carry the pellets away from the extruder exit. This process also facilitates cooling of the pellets to prevent caking which reduces the need for a subsequent de-clumping step in the process sequence. Conveyors may be kept at ambient temperatures, however, in order to reduce cooling time, forced air circulation with chiller air may be applied to induce rapid cooling.

Depending on the formulation, speed and extent of cooling, pellets may stick together forming clumps of variable sizes. These clumps must be reduced in size, achieved by de-clumping, to ensure a steady and stable injection molding process.

Subsequent to cooling and de-clumping, pellets are conveyed to injection molding, where the final product shape is achieved.

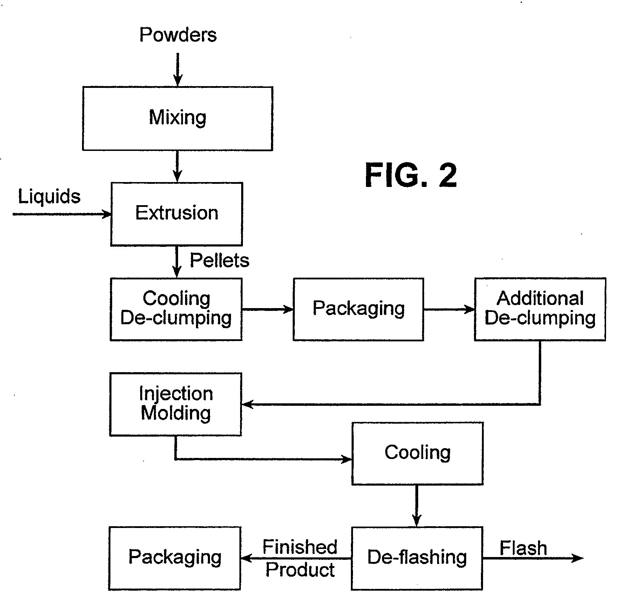

An alternative manufacturing process can be seen in Figure 2. Figure 2 shows a diagram of another exemplary method of producing the pet chew product according to the invention, in which pellets are manufactured well prior to being used in injection molding.

While the mixing, extrusion, cooling and de-clumping steps may be similar to that described above (see Figure 1), in the alternative manufacturing process illustrated in Figure 2, pellets are packed into suitable containers upon cooling or de-clumping. For packaging, totes, sacks, super-sacks, barrels, cartons, etc. may be used for storage and transfer. The selection of packaging depends on, among others, packing characteristics of pellets, environmental and safety regulations, handling/transportation requirements, usage frequencies and sizes.

Pellet containers must be appropriate for target use and inert enough to protect their contents from external elements such as insects, birds, dust, temperature and humidity fluctuations, sun exposure, aroma and flavor transfer/leach from the containers.

Prior to injection molding, an additional de-clumping process may be required to break up clumps into individual pellets again if packing or clumping of pellets is observed in the containers during storage or transport. Upon de-clumping, pellets are molded into final product shape by injection molding as described below.

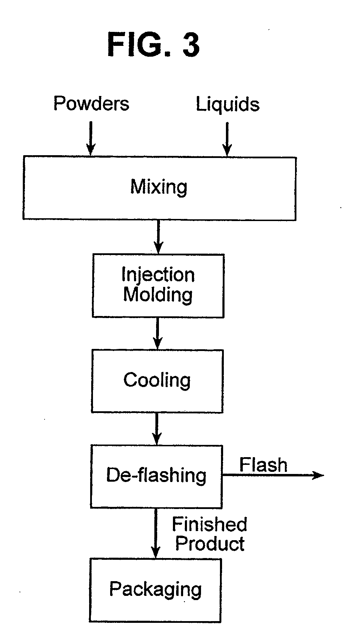

Figure 3 shows yet another diagram of an exemplary method of producing the pet chew product according to the invention. The process, shown in Figure 3, combines powder and liquid ingredients together in a high shear mixer to form a uniform mass. According to the process shown in Figure 3, pellet production step is also eliminated by feeding the uniform mass directly into the injection molder's barrel.

Subsequent to injection molding, the product is cooled and subjected to a de-flashing process where excess material on the product is removed. De-flashing may be achieved by vibration of product inside vibrating hoppers, vibrating tables and/or tumblers.

Injection Molding

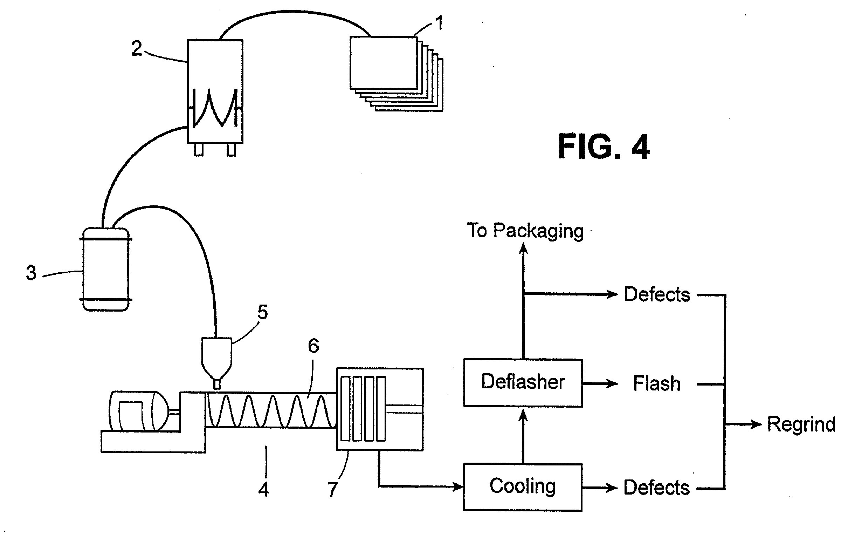

Figure 4 shows a schematic drawing of the injection molding process that may be used to prepare the pet chew product according to the invention. Material for the injection molding process may be delivered in containers 1 in the form of pellets. Occasionally, due to transport, load pressure and the nature of the recipe, the pellets have a tendency to pack together and form large adhesive blocks. Thus, if necessary, each container is transferred to a de-clumper 2 to break up and separate the individual pellets to allow feeding into the injection molders 4. The individual pellets are collected in a container 3 and then vacuum fed to a feeder 5 leading to the injection molders for forming.

As the pellets are conveyed across the injection molder screw 6, the high temperatures, shear and pressure generated by the screw transforms the solid pellets into a melted product that can be injected into the mold 7 and take form. The melted product travels through the sprue and/or manifolds, runners and/or nozzles and then the cavities to form the final product shape. Once the shot is complete, the injection screw will retract and refill with melted product for the next shot.

As the injection molder is being filled, the formed products in the cavities are either cooled or heated as required to cool and/or set the products. Once the desired cooling or set time is achieved, the mold opens and the products are released from the cavities through ejector pins on the backside of the product. The molded products fall on to a mechanical conveyor, which are subsequently collected for cooling. If runners are present, they are removed and the molded products are laid out on a cooling table to allow the temperature of the bones to reach ambient temperature prior to packaging. An exemplary molded pet chew is shown in Figure 5.

Exemplary injection molding process parameters for the formation of the molded products are shown in Table 2.

**Table 2.** Exemplary injection molding process parameters.

| Parameters | Units | Range |
| --- | --- | --- |
| Feed Rate | Kilogram/hour (kg/hr) | 20-250 |
| Barrel Temperatures | Degrees Fahrenheit (F) | 60-350 (16-178°C) |
| Injection Speeds | Inches/second (in/s) | 1-10 (2.54-25.4 cm/s) |
| Injection Pressures | Pound per square inch (psi) | 5000-25000 (34.5 - 172.4 Mpa) |
| Injection Times | Second (s) | 3-40 |
| Stroke | Inches/second (in/s) | 0.5-8.0 (1.27 - 24.32 cm/s) |
| Screw Speed | Revolutions per minute | 50-300 |
| Mould Temperatures | Degrees Fahrenheit (F) | 140-350 (60-178°C) |
| Cooling/Set Times | Second (s) | 10-175 |

Once enough molded products are collected, they are transferred to the de-flasher to remove excess flash. At the exit of the de-flasher, the product is screened where the de-flashed products are sent for packaging and flash is collected for regrind. Flash that is removed throughout the system and products that do not meet product specifications are also collected and used for regrind.

It is also possible to simply admix the ingredients for the formulation and go directly to the injection molder so long as the parameters are controlled to achieve thermoplasticization of the formulation.

**Claims**

**1.** An edible pet chew comprising:

a) fibrous protein in an amount of 30% to 50% by weight of the chew; wherein the fibrous protein comprises a mixture of wheat protein isolate, soy protein isolate and sodium caseinate;
b) gelatin in an amount of 15% to 25% by weight of the chew;
c) plasticizer in an amount of 15% to 30% by weight of the chew, wherein the plasticizer comprises glycerol or hydrogenated starch hydrolysate; and
d) water in an amount of 5% to 15% by weight of the chew,

wherein the solubility of the edible pet chew is 60% to 95% *in vitro* disappearance (IVD) (as measured by the method set out in paragraphs [0044] to [0054] of the description).

**2.** An edible pet chew according to claim 1, containing starch in an amount less than 5% by weight of the composition.

**3.** An edible pet chew according to claim 1 or 2, wherein the pet chew is comprised of a homogeneous mass.

4. Use of an edible pet chew according to any of claims 1 to 3 having hardness (as measured by the method set out in paragraphs [0034] to [0039] of the description) in the range of 33 N to 1270 N to feed a dog that weighs less than 10 kg and has a dolichocephalic skull type.

5. Use of an edible pet chew according to any of claims 1 to 3 having hardness (as measured by the method set out in paragraphs [0034] to [0039] of the description) in the range of 300 N to 2125 N to feed a dog that weighs 10 kg to 20 kg and has a dolichocephalic skull type.

6. Use of an edible pet chew according to any of claims 1 to 3 having hardness (as measured by the method set out in paragraphs [0034] to [0039] of the description) in the range of 445 N to 2295 N to feed a dog that weighs more than 20 kg and has a dolichocephalic skull type.

7. Use of an edible pet chew according to any of claims 1 to 3 having hardness (as measured by the method set out in paragraphs [0034] to [0039] of the description) in the range of 140 N to 1850 N to feed a dog that weighs less than 10 kg and has a mesaticephalic skull type.

8. Use of an edible pet chew according to any of claims 1 to 3 having hardness (as measured by the method set out in paragraphs [0034] to [0039] of the description) in the range of 215 N to 2700 N to feed a dog that weighs 10 kg to 20 kg and has a mesaticephalic skull type.

9. Use of an edible pet chew according to any of claims 1 to 3 having hardness (as measured by the method set out in paragraphs [0034] to [0039] of the description) in the range of 485 N to 3630 N to feed a dog that weights more than 20 kg and has a mesaticephalic skull type.

10. Use of an edible pet chew according to any of claims 1 to 3 having hardness (as measured by the method set out in paragraphs [0034] to [0039] of the description) in the range of 125 N to 1535 N to feed a dog that weighs less than 10 kg and has a brachycephalic skull type.

11. Use of an edible pet chew according to any of claims 1 to 3 having hardness (as measured by the method set out in paragraphs [0034] to [0039] of the description) in the range of 150 N to 3100 N to feed a dog that weighs 10 kg to 20 kg and has a brachycephalic skull type.

12. Use of an edible pet chew according to any of claims 1 to 3 having hardness (as measured by the method set out in paragraphs [0034] to [0039] of the description) in the range of 710 N to 4780 N to feed a dog that weighs more than 20 kg and has a brachycephalic skull type.

13. Use of an edible pet chew according to any of claims 1 to 3 having hardness (as measured by the method set out in paragraphs [0034] to [0039] of the description) in the range of 100 N to 700 N to feed a dog that weighs less than 11.4 kg.

14. Use of an edible pet chew according to any of claims 1 to 3 having hardness (as measured by the method set out in paragraphs [0034] to [0039] of the description) in the range of 200 N to 800 N to feed a dog that weighs 11.4 kg or more.

15. An edible pet chew composition for preparing a thermoplasticized molded pet chew, the composition comprising:

a) fibrous protein in an amount of 30% to 50% by weight of the composition, wherein the fibrous protein comprises wheat protein isolate, soy protein isolate and sodium caseinate;
b) gelatin in an amount of 15% to 25% by weight of the composition;
c) plasticizer in an amount of 15% to 30% by weight of the composition, wherein the plasticizer comprises glycerol or hydrogenated starch hydrolysate; and
d) water in an amount of 5% to 15% by weight of the composition,

wherein the solubility of the edible pet chew is 60% to 95% *in vitro* disappearance (IVD) (as measured by the method set out in paragraphs [0044] to [0054] of the description).

16. An edible pet chew composition according to claim 15 containing starch in an amount less than 5% by weight of the composition.

17. An edible pet chew composition according to claim 15 or 16, or a composition for preparing an edible pet chew according to claim 1, comprising at least one of fat, a flavor enhancer, a humectant, a preservative, a nutrient, and/or a colorant.

18. An edible pet chew or composition for preparing an edible pet chew according to claim 17, wherein the fat is vegetable oil.

19. An edible pet chew composition according to any of claims 15 to 18, wherein the gelatin has a bloom strength in a range of 100 to 200.

20. A method of preparing an edible pet chew comprising the steps of:

   a) forming a pet chew composition by admixing:

   i) fibrous protein in an amount of 30% to 50% by weight of the composition, wherein the fibrous protein comprises wheat protein isolate, soy protein isolate and sodium caseinate;
   ii) gelatin in an amount of 15% to 25% by weight of the composition;
   iii) plasticizer in an amount of 15% to 30% by weight of the composition, wherein the plasticizer comprises glycerol or hydrogenated starch hydrolysate; and
   iv) water in an amount of 5% to 15% by weight of the composition,

   b) thermoplasticizing the pet chew composition; and
   c) molding the thermoplastic pet chew composition to form the pet chew

   wherein the solubility of the edible pet chew is 60% to 95% *in vitro* disappearance (IVD) (as measured by the method set out in paragraphs [0044] to [0054] of the description).

21. A method according to claim 20, wherein the edible pet chew contains starch in an amount less than 5% by weight of the composition.

22. A method according to claim 20 or 21, wherein the step of thermoplasticizing is by extrusion.

23. A method according to claim 22, wherein the pet chew composition is passed through an extruder barrel that reaches a temperature in a range of 88°C to 150°C.

24. A method according to any of claims 20 to 23, wherein the step of molding is injection molding.

25. A method according to any of claims 20 to 24, wherein the gelatin has a bloom strength in a range of 100 to 200.

**Patentansprüche**

1. Verzehrbares Haustier-Kauprodukt, umfassend:

   a) faserartiges Protein in einer Menge von 30 Gew.-% bis 50 Gew.-% des Kauprodukts; wobei das faserartige Protein ein Gemisch von Weizenproteinisolat, Sojaproteinisolat und Natriumkaseinat umfasst;
   b) Gelatine in einer Menge von 15 Gew.-% bis 25 Gew.-% des Kauprodukts;
   c) Weichmacher in einer Menge von 15 Gew.-% bis 30 Gew.-% des Kauprodukts, wobei der Weichmacher Glycerin oder hydriertes Stärkehydrolysat umfasst; und
   d) Wasser in einer Menge von 5 Gew.-% bis 15 Gew.-% des Kauprodukts,

   wobei die Löslichkeit des verzehrbaren Haustier-Kauprodukts 60 % bis 95 % in-vitro-Schwund (IVD) beträgt (wie gemessen durch das in den Absätzen [0044] bis [0054] der Beschreibung beschriebene Verfahren).

2. Verzehrbares Haustier-Kauprodukt gemäß Anspruch 1, enthaltend Stärke in einer Menge von weniger als 5 Gew.-% der Zusammensetzung.

3. Verzehrbares Haustier-Kauprodukt gemäß Anspruch 1 oder 2, wobei das Haustier-Kauprodukt aus einer homogenen Masse besteht.

**4.** Verwendung eines verzehrbaren Haustier-Kauprodukts gemäß einem der Ansprüche 1 bis 3 mit einer Härte (wie gemessen durch das in den Absätzen [0034] bis [0039] der Beschreibung beschriebene Verfahren) in dem Bereich von 33 N bis 1270 N zum Füttern eines Hundes, der weniger als 10 kg wiegt und einen Schädel vom Dolichocephalie-Typ aufweist.

**5.** Verwendung eines verzehrbaren Haustier-Kauprodukts gemäß einem der Ansprüche 1 bis 3 mit einer Härte (wie gemessen durch das in den Absätzen [0034] bis [0039] der Beschreibung beschriebene Verfahren) in dem Bereich von 300 N bis 2125 N zum Füttern eines Hundes, der 10 kg bis 20 kg wiegt und einen Schädel vom Dolichocephalie-Typ aufweist.

**6.** Verwendung eines verzehrbaren Haustier-Kauprodukts gemäß einem der Ansprüche 1 bis 3 mit einer Härte (wie gemessen durch das in den Absätzen [0034] bis [0039] der Beschreibung beschriebene Verfahren) in dem Bereich von 445 N bis 2295 N zum Füttern eines Hundes, der mehr als 20 kg wiegt und einen Schädel vom Dolichocephalie-Typ aufweist.

**7.** Verwendung eines verzehrbaren Haustier-Kauprodukts gemäß einem der Ansprüche 1 bis 3 mit einer Härte (wie gemessen durch das in den Absätzen [0034] bis [0039] der Beschreibung beschriebene Verfahren) in dem Bereich von 140 N bis 1850 N zum Füttern eines Hundes, der weniger als 10 kg wiegt und einen Schädel vom Mesaticephalie-Typ aufweist.

**8.** Verwendung eines verzehrbaren Haustier-Kauprodukts gemäß einem der Ansprüche 1 bis 3 mit einer Härte (wie gemessen durch das in den Absätzen [0034] bis [0039] der Beschreibung beschriebene Verfahren) in dem Bereich von 215 N bis 2700 N zum Füttern eines Hundes, der 10 kg bis 20 kg wiegt und einen Schädel vom Mesaticephalie-Typ aufweist.

**9.** Verwendung eines verzehrbaren Haustier-Kauprodukts gemäß einem der Ansprüche 1 bis 3 mit einer Härte (wie gemessen durch das in den Absätzen [0034] bis [0039] der Beschreibung beschriebene Verfahren) in dem Bereich von 485 N bis 3630 N zum Füttern eines Hundes, der mehr als 20 kg wiegt und einen Schädel vom Mesaticephalie-Typ aufweist.

**10.** Verwendung eines verzehrbaren Haustier-Kauprodukts gemäß einem der Ansprüche 1 bis 3 mit einer Härte (wie gemessen durch das in den Absätzen [0034] bis [0039] der Beschreibung beschriebene Verfahren) in dem Bereich von 125 N bis 1535 N zum Füttern eines Hundes, der weniger als 10 kg wiegt und einen Schädel vom Brachycephalie-Typ aufweist.

**11.** Verwendung eines verzehrbaren Haustier-Kauprodukts gemäß einem der Ansprüche 1 bis 3 mit einer Härte (wie gemessen durch das in den Absätzen [0034] bis [0039] der Beschreibung beschriebene Verfahren) in dem Bereich von 150 N bis 3100 N zum Füttern eines Hundes, der 10 kg bis 20 kg wiegt und einen Schädel vom Brachycephalie-Typ aufweist.

**12.** Verwendung eines verzehrbaren Haustier-Kauprodukts gemäß einem der Ansprüche 1 bis 3 mit einer Härte (wie gemessen durch das in den Absätzen [0034] bis [0039] der Beschreibung beschriebene Verfahren) in dem Bereich von 710 N bis 4780 N zum Füttern eines Hundes, der mehr als 20 kg wiegt und einen Schädel vom Brachycephalie-Typ aufweist.

**13.** Verwendung eines verzehrbaren Haustier-Kauprodukts gemäß einem der Ansprüche 1 bis 3 mit einer Härte (wie gemessen durch das in den Absätzen [0034] bis [0039] der Beschreibung beschriebene Verfahren) in dem Bereich von 100 N bis 700 N zum Füttern eines Hundes, der weniger als 11,4 kg wiegt.

**14.** Verwendung eines verzehrbaren Haustier-Kauprodukts gemäß einem der Ansprüche 1 bis 3 mit einer Härte (wie gemessen durch das in den Absätzen [0034] bis [0039] der Beschreibung beschriebene Verfahren) in dem Bereich von 200 N bis 800 N zum Füttern eines Hundes, der 11,4 kg oder mehr wiegt.

**15.** Verzehrbare Haustier-Kauproduktzusammensetzung zum Herstellen eines thermoplastifizierten geformten Haustier-Kauprodukts, wobei die Zusammensetzung umfasst:

a) faserartiges Protein in einer Menge von 30 Gew.-% bis 50 Gew.-% der Zusammensetzung, wobei das faserartige Protein Weizenproteinisolat, Sojaproteinisolat und Natriumkaseinat umfasst;
b) Gelatine in einer Menge von 15 Gew.-% bis 25 Gew.-% der Zusammensetzung;
c) Weichmacher in einer Menge von 15 Gew.-% bis 30 Gew.-% der Zusammensetzung, wobei der Weichmacher Glycerin oder hydriertes Stärkehydrolysat umfasst; und
d) Wasser in einer Menge von 5 Gew.-% bis 15 Gew.-% der Zusammensetzung,

wobei die Löslichkeit des verzehrbaren Haustier-Kauprodukts 60 % bis 95 % *in-vitro-Schwund* (IVD) beträgt (wie gemessen durch das in den Absätzen [0044] bis [0054] der Beschreibung beschriebene Verfahren).

16. Verzehrbare Haustier-Kauproduktzusammensetzung gemäß Anspruch 15, enthaltend Stärke in einer Menge von weniger als 5 Gew.-% der Zusammensetzung.

17. Verzehrbare Haustier-Kauproduktzusammensetzung gemäß Anspruch 15 oder 16 oder Zusammensetzung für die Herstellung eines verzehrbaren Haustier-Kauprodukts gemäß Anspruch 1, umfassend wenigstens eines von Fett, einem Geschmacksverstärker, einem Feuchthaltemittel, einem Konservierungsmittel, einem Nährstoff und/oder einem Farbstoff.

18. Verzehrbare Haustier-Kauproduktzusammensetzung oder Zusammensetzung für die Herstellung eines verzehrbaren Haustier-Kauprodukts gemäß Anspruch 17, wobei das Fett ein pflanzliches Öl ist.

19. Verzehrbares Haustier-Kauprodukt gemäß einem der Ansprüche 15 bis 18, wobei die Gelatine eine Bloom-Festigkeit in dem Bereich von 100 bis 200 aufweist.

20. Verfahren zum Herstellen eines verzehrbaren Haustier-Kauprodukts, umfassend die Schritte:

a) Bilden einer Haustier-Kauproduktzusammensetzung durch Mischen von:

i) faserartigem Protein in einer Menge von 30 Gew.-% bis 50 Gew.-% der Zusammensetzung, wobei das faserartige Protein Weizenproteinisolat, Sojaproteinisolat und Natriumkaseinat umfasst;
ii) Gelatine in einer Menge von 15 Gew.-% bis 25 Gew.-% der Zusammensetzung;
iii) Weichmacher in einer Menge von 15 Gew.-% bis 30 Gew.-% der Zusammensetzung, wobei der Weichmacher Glycerin oder hydriertes Stärkehydrolysat umfasst; und
iv) Wasser in einer Menge von 5 Gew.-% bis 15 Gew.-% der Zusammensetzung,

b) Thermoplastifizieren der Haustier-Kauproduktzusammensetzung; und
c) Formen der thermoplastischen Haustier-Kauproduktzusammensetzung, um das Haustier-Kauprodukt zu bilden,

wobei die Löslichkeit des verzehrbaren Haustier-Kauprodukts 60 % bis 95 % in-vitro-Schwund (IVD) beträgt (wie gemessen durch das in den Absätzen [0044] bis [0054] der Beschreibung beschriebene Verfahren).

21. Verfahren gemäß Anspruch 20, wobei das verzehrbare Haustier-Kauprodukt Stärke in einer Menge von weniger als 5 Gew.-% der Zusammensetzung enthält.

22. Verfahren gemäß Anspruch 20 oder 21, wobei der Schritt des Thermoplastifizierens durch Extrusion durchgeführt wird.

23. Verfahren gemäß Anspruch 22, wobei die Haustier-Kauproduktzusammensetzung durch ein Extruderrohr, das eine Temperatur in dem Bereich von 88 °C bis 150 °C erreicht, geführt wird.

24. Verfahren gemäß einem der Ansprüche 20 bis 23, wobei der Schritt des Formens Spritzguss ist.

25. Verfahren gemäß einem der Ansprüche 20 bis 24, wobei die Gelatine eine Bloom-Festigkeit in dem Bereich von 100 bis 200 aufweist.

**Revendications**

1. Os à mâcher comestible, comprenant :

   a) des protéines fibreuses selon une quantité allant de 30% à 50% en poids de l'os à mâcher ; où les protéines fibreuses comprennent un mélange d'isolat de protéines de blé, d'isolat de protéines de soja et de caséinate de sodium ;
   b) de la gélatine selon une quantité allant de 15% à 25% en poids de l'os à mâcher ;
   c) un plastifiant selon une quantité allant de 15% à 30% en poids de l'os à mâcher, où le plastifiant comprend du glycérol ou un hydrolysat d'amidon hydrogéné ; et
   d) de l'eau selon une quantité allant de 5% à 15% en poids de l'os à mâcher ;

   où la solubilité de l'os à mâcher comestible va de 60% à 95% de disparition *in vitro* (IVD) (tel que mesuré par la méthode exposée dans les paragraphes [0044] à [0054] de la description).

2. Os à mâcher comestible selon la revendication 1, contenant de l'amidon selon une quantité inférieure à 5% en poids de la composition.

3. Os à mâcher comestible selon la revendication 1 ou 2, où l'os à mâcher est constitué d'une masse homogène.

4. Utilisation d'un os à mâcher comestible selon l'une quelconque des revendications 1 à 3, ayant une dureté (tel que mesuré par la méthode exposée dans les paragraphes [0034] à [0039] de la description) dans la plage allant de 33 N à 1270 N afin de nourrir un chien pesant moins de 10 kg et possédant un type de crâne dolichocéphale.

5. Utilisation d'un os à mâcher comestible selon l'une quelconque des revendications 1 à 3, ayant une dureté (tel que mesuré par la méthode exposée dans les paragraphes [0034] à [0039] de la description) dans la plage allant de 300 N à 2125 N afin de nourrir un chien pesant de 10 kg à 20 kg et possédant un type de crâne dolichocéphale.

6. Utilisation d'un os à mâcher comestible selon l'une quelconque des revendications 1 à 3, ayant une dureté (tel que mesuré par la méthode exposée dans les paragraphes [0034] à [0039] de la description) dans la plage allant de 445 N à 2295 N afin de nourrir un chien pesant plus de 20 kg et possédant un type de crâne dolichocéphale.

7. Utilisation d'un os à mâcher comestible selon l'une quelconque des revendications 1 à 3, ayant une dureté (tel que mesuré par la méthode exposée dans les paragraphes [0034] à [0039] de la description) dans la plage allant de 140 N à 1850 N afin de nourrir un chien pesant moins de 10 kg et possédant un type de crâne mésaticéphale.

8. Utilisation d'un os à mâcher comestible selon l'une quelconque des revendications 1 à 3, ayant une dureté (tel que mesuré par la méthode exposée dans les paragraphes [0034] à [0039] de la description) dans la plage allant de 215 N à 2700 N afin de nourrir un chien pesant de 10 kg à 20 kg et possédant un type de crâne mésaticéphale.

9. Utilisation d'un os à mâcher comestible selon l'une quelconque des revendications 1 à 3, ayant une dureté (tel que mesuré par la méthode exposée dans les paragraphes [0034] à [0039] de la description) dans la plage allant de 485 N à 3630 N afin de nourrir un chien pesant plus de 20 kg et possédant un type de crâne mésaticéphale.

10. Utilisation d'un os à mâcher comestible selon l'une quelconque des revendications 1 à 3, ayant une dureté (tel que mesuré par la méthode exposée dans les paragraphes [0034] à [0039] de la description) dans la plage allant de 125 N à 1535 N afin de nourrir un chien pesant moins de 10 kg et possédant un type de crâne brachycéphale.

11. Utilisation d'un os à mâcher comestible selon l'une quelconque des revendications 1 à 3, ayant une dureté (tel que mesuré par la méthode exposée dans les paragraphes [0034] à [0039] de la description) dans la plage allant de 150 N à 3100 N afin de nourrir un chien pesant de 10 kg à 20 kg et possédant un type de crâne brachycéphale.

12. Utilisation d'un os à mâcher comestible selon l'une quelconque des revendications 1 à 3, ayant une dureté (tel que mesuré par la méthode exposée dans les paragraphes [0034] à [0039] de la description) dans la plage allant de 710 N à 4780 N afin de nourrir un chien pesant plus de 20 kg et possédant un type de crâne brachycéphale.

13. Utilisation d'un os à mâcher comestible selon l'une quelconque des revendications 1 à 3, ayant une dureté (tel que mesuré par la méthode exposée dans les paragraphes [0034] à [0039] de la description) dans la plage allant de 100 N à 700 N afin de nourrir un chien pesant moins de 11,4 kg.

14. Utilisation d'un os à mâcher comestible selon l'une quelconque des revendications 1 à 3, ayant une dureté (tel que mesuré par la méthode exposée dans les paragraphes [0034] à [0039] de la description) dans la plage allant de 200 N à 800 N afin de nourrir un chien pesant 11,4 kg ou plus.

15. Composition d'os à mâcher comestible destinée à préparer un os à mâcher moulé et thermo-plastifié, la composition comprenant :

 a) des protéines fibreuses selon une quantité allant de 30% à 50% en poids de la composition ; où les protéines fibreuses comprennent de l'isolat de protéines de blé, de l'isolat de protéines de soja et du caséinate de sodium ;
 b) de la gélatine selon une quantité allant de 15% à 25% en poids de la composition ;
 c) un plastifiant selon une quantité allant de 15% à 30% en poids de la composition, où le plastifiant comprend du glycérol ou un hydrolysat d'amidon hydrogéné ; et
 d) de l'eau selon une quantité allant de 5% à 15% en poids de la composition ;

 où la solubilité de l'os à mâcher comestible va de 60% à 95% de disparition *in vitro* (IVD) (tel que mesuré par la méthode exposée dans les paragraphes [0044] à [0054] de la description).

16. Composition d'os à mâcher comestible selon la revendication 15, comprenant de l'amidon selon une quantité inférieure à 5% en poids de la composition.

17. Composition d'os à mâcher comestible selon la revendication 15 ou 16, ou composition destinée à préparer un os à mâcher comestible selon la revendication 1, comprenant au moins l'un parmi une matière grasse, un exhausteur d'arôme, un humectant, un conservateur, un nutriment et/ou un colorant.

18. Os à mâcher comestible, ou composition destinée à préparer un os à mâcher comestible selon la revendication 17, où la matière grasse est une huile végétale.

19. Composition d'os à mâcher comestible selon l'une quelconque des revendications 15 à 18, où la gélatine possède un indice de Bloom dans la plage allant de 100 à 200.

20. Méthode de préparation d'un os à mâcher comestible, comprenant les étapes :

 a) de formation d'une composition d'os à mâcher, par le mélange

 i) de protéines fibreuses selon une quantité allant de 30% à 50% en poids de la composition ; où les protéines fibreuses comprennent de l'isolat de protéines de blé, de l'isolat de protéines de soja et du caséinate de sodium ;
 ii) de la gélatine selon une quantité allant de 15% à 25% en poids de la composition ;
 iii) un plastifiant selon une quantité allant de 15% à 30% en poids de la composition, où le plastifiant comprend du glycérol ou un hydrolysat d'amidon hydrogéné ; et
 iv) de l'eau selon une quantité allant de 5% à 15% en poids de la composition ;

 b) de thermoplastification de la composition d'os à mâcher ; et
 c) de moulage de la composition d'os à mâcher thermoplastique afin de former l'os à mâcher, où la solubilité de l'os à mâcher comestible va de 60% à 95% de disparition *in vitro* (IVD) (tel que mesuré par la méthode exposée dans les paragraphes [0044] à [0054] de la description).

21. Méthode selon la revendication 20, où l'os à mâcher comestible contient de l'amidon selon une quantité inférieure à 5% en poids de la composition.

22. Méthode selon la revendication 20 ou 21, où l'étape de thermoplastification se fait par extrusion.

23. Méthode selon la revendication 22, où on fait passer la composition d'os à mâcher dans un cylindre d'extrudeuse qui atteint une température dans la plage allant de 88°C à 150°C.

24. Méthode selon l'une quelconque des revendications 20 à 23, où l'étape de moulage se fait par moulage par injection.

**25.** Méthode selon l'une quelconque des revendications 20 à 24, où la gélatine possède un indice de Bloom dans la plage allant de 100 à 200.

EP 2 037 755 B1

Powders

Mixing

Liquids → Extrusion

Pellets

Cooling De-clumping

Injection Molding

Cooling

Packaging ← Finished Product ← De-flashing → Flash

**FIG. 1**

18

Powders

Mixing

**FIG. 2**

Liquids → Extrusion

| Pellets

Cooling De-clumping → Packaging → Additional De-clumping

Injection Molding

Cooling

Packaging ← Finished Product ← De-flashing → Flash

# FIG. 3

Powders      Liquids

```
        ↓              ↓
┌─────────────────────────────┐
│           Mixing            │
└─────────────────────────────┘
              ↓
        ┌──────────────┐
        │  Injection   │
        │   Molding    │
        └──────────────┘
              ↓
        ┌──────────────┐
        │   Cooling    │
        └──────────────┘
              ↓
        ┌──────────────┐              Flash
        │ De-flashing  │──────────────────→
        └──────────────┘
              ↓  Finished
                 Product
        ┌──────────────┐
        │  Packaging   │
        └──────────────┘
```

# FIG. 4

To Packaging

Defects

Deflasher → Flash

Cooling → Defects

Regrind

# FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6455083 B1
- WO 0013521 A
- US 5240720 A
- US 2002090444 A1
- US 4419372 A
- WO 2007149972 A